# EUROPEAN PATENT APPLICATION

(11) **EP 2 615 040 A2**
(43) Date of publication of application: **17.07.2013**
(21) Application number: 11823793.2
(22) Date of filing: 08.09.2011
(51) Int. Cl.: B65D 6/06, B65D 25/04, A47G 19/30, A47J 47/00

(54) **SPICE STORAGE CONTAINER HAVING A LATTICE STRUCTURE**

(30) Priority: 08.09.2010 KR 20100009431 U
(71) Applicant: Lee, Jungmi, Wau-ro, Hwaseong-si, Gyeonggi-do, 445-897 (KR)
(72) Inventor: Lee, Jungmi, Wau-ro, Hwaseong-si, Gyeonggi-do, 445-897 (KR)
(74) Representative: Pfenning, Meinig & Partner GbR
(86) International application number: PCT/KR2011/006648
(87) International publication number: WO 2012/033360

(57) **Abstract**

The present invention relates to a spice storage container which can store a predetermined amount (quantity) of spices such as garlic or ginger. More particularly, the present invention relates to a spice storage container having a lattice structure of a predetermined size for storing a small quantity of spices such as garlic or ginger, or a small quantity of chopped scallions or chili peppers and quickly take out and use a required amount (number) of said spices, scallions or chili peppers from the container as needed, thereby saving time in cooking and maximizing use convenience.

## Description

### Technical Field

The present invention relates to a spice storage container which can store a predetermined amount (quantity) of spices such as garlic or ginger. More particularly, the present invention relates to a spice storage container having a lattice structure of a perdetermined size for storing a small quantity of spices such as garlic or ginger, or a small quantity of chopped scallioins or chili peppers so as to quickly take out and use a required amount (number) of said spices, scallions or chili peppers from the container as needed, thereby saving time in cooking and maximizing use convenience.

### Description of Related Art

Average households or restaurants put spices made of vegetables such as ground garlic, ginger or chili peppers in appropriate containers and place them in refrigerator and take out and use them as needed. However, when spices such as ground garlic or ginger are stored at room temperature or in refrigerator, they spoil or decompose as time goes by and become unfit for use.

Therefore, one should frequently grind a small amount of garlic or ginger and use it, which was very cumbersome and inconvenient in time and uneffective economically.

As another way to remove such inconvenience, one used to grind a good deal of spices and put them in plastic bag and store it in a freezer and take out and use as required by cutting it with a knife. This way, however, is also inconvenient because frozen spices are very hard to cut. Some shops freeze spices such as garlic or ginger into small pieces and put them in plastic bag and sell them. These spices, however, melt in time and are very hard to cut into small pieces and use them.

Therefore, there is a compulsive need of tools or containers which can use ground spices quickly and conveniently as much as needed in cooking during a busy day.

To remove such inconvenience, the present applicant has applied and publicated 'a cutter for the frozen spices' (Application No.10-2008-0089636, 11 Sep. 2008) and 'an automatic cutter for the frozen spices' (Application No.10-2008-0124485, 9 Dec.2008).

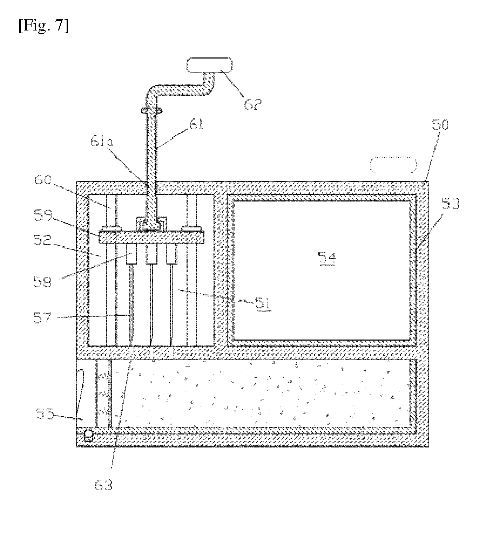

Said conventional cutter for the frozen spices (Application No.10-2008-0089636, 11 Sep. 2008), as shown in the drawing 7, consists of the body (50), the first space (52) having a cutting tool (51) on one side of the upper part of said body (50), the second space (54) in which a container case (53) to keep a rice paddle or a spoon on the other side of the upper part of said body (50) can be stored, and the spice storage container in which the drawer-type spice container (55) which is installed in the lower part of said body (50) and stores the frozen spices.

Said cutting tool (51) installed in said first space (52) consists of the body of blade (58) in which a blade (57) to cut the frozen spices is installed, a plate (59) which fixes said body of blade (58), a supporter (60) which fixes said plate (59) while reciprocating upward and downward, an operating rod (61) which has male thread on the outside so as to pull upward or push downward said plate (59) to make it reciprocate in the upper part of said plate (59), and a turning handle (62) which has said operating rod (61) spin clockwise or counterclockwise so that said operating rod (61) can reciprocate upward and downward.

On the upper surface of said first space (52), said operating rod (61) is fastened and a rod insertion hole (61a) in which female thread is formed so as to spin clockwise or counterclockwise. In the bottom of said first space (52), a blade penetration part (63) is installed so that said blade (57) may penetrate and cut the frozen spices stored in the spice container (55).

Said conventional automatic cutter for the frozen spices (Application Neo.10-2008-0124485, 9 Dec.2008) is made to operate a spice cutting tool automatically, not manually.

### Brief Summary of the Invention

### Technical Task

Average households or restaurants make a good deal of spices made of vegetables such as ground ginger or garlic and put them in plastic bag or container and place it in a refrigerator and take out and cut and use as needed to cook in a quick and convenient way. At this time, tools such as a knife are used to cut the frozen spices, which may cause safety accident such as cuts as well as inconvenience.

And conventional cutters for the frozen spices like said one, too, run the risk of safety accident because they use a blade to cut the frozen spices and require high manufacturing expenses due to their complex structure and bear lots of problems in storage due to their large volume.

Having been designed to solve the abovementioned problems, the present invention consists of a spice storage container having a lattice structure in many horizontal and vertical lines with the container for evenly ground spices such as garlic and ginger, a cover plate which covers a base frame in which said spice storage container having a lattice structure is inserted and installed and said spice storage container having a lattice structure to protect them from foreign substances to stack the containers in multi-stage, and a case which stores the containers slidingly, so as to store a predetermined amount of spices in said spice storage lattice container and take out and use a required amount (number) of said spices from the container as needed, thereby saving time in cooking and maximizing use convenience.

### Means to Solve the Task

In order to obtain the abovementioned goal, for a spice storage container having a lattice structure to store a small amount of evenly ground spices such as garlic or ginger of the present invention,

Said spice storage container is characterized as consisting of a container which can store spices such as ground garlic or ginger, a spice storage container with a lattice structure which is formed continuously in said container in many horizontal and vertical lines, a cover plate which covers said spice storage lattice container to protect it from foreign substances, and a case which can store them slidingly.

### Effect of the Invention

Therefore, said spice storage container with a lattice structure of the present invention can store the frozen spices in a small amount using a spice storage container in a lattice form so that users may take out and use as needed when they want quickly and conveniently, thereby improving storage efficiency of the frozen spices remarkably and saving much time in cooking and increasing not only the utility of cooking but also of storage.

Furthermore, because the present invention which is configured so as to store a small amount of spices in a lattice structure has extremely simple components, manufacturing expenses can be remarkably reduced and use convenience can be improved.

### Brief Description of the Several View of the Drawing

Drawing 1 is a sketchy side state view of the embodiment of a spice storage container having a lattice structure according to the present invention.

Drawing 2 is a sketchy separate side view of a spice storage container having a lattice structure according to the present invention.

Drawing 3 is a top view (A), a cross-sectional view (B) and a separate cross-sectional view (C) of a spice storage container having a lattice structure according to the present invention.

Drawing 4 is a state cross-sectional view which shows an enlarged view of the lumbar part of a spice storage container having a lattice structure according to the present invention.

Drawing 5 is a top view of the second embodiment of a spice storage container having a lattice structure according to the present invention.

Drawing 6 is a side view of the second embodiment.

Drawing 7 is a state cross-sectional view of a conventional cutter for the frozen spices.

<Legend>

100: Spice storage container having a lattice structure 110: Spice storage lattice container

120: Base frame 130: Cover plate 140: Case

111: Container 112: Container lattice groove 113: Neck 114: Concave groove
115: Supporter 116: Reinforcing rib 117: Handle

121: Hole 122: Frame lattice groove 123: Rim 124: Support protrusion

131: Groove 132: Handle 133: Stack groove 134: Protrusion

141: Protrusion

### The Best Form for Embodiment of the Invention

From now on, a desirable embodiment of the present invention will be described in detail on reference to the attached drawings so that those who have common knowledge of the relevant field can implement easily.

[The first embodiment]

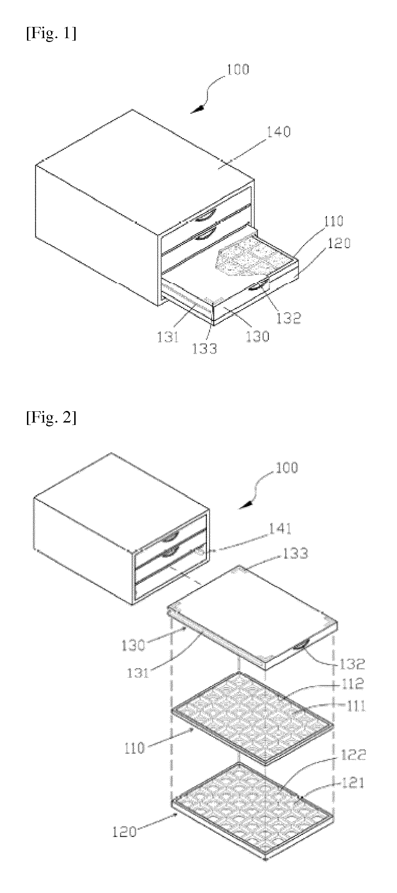

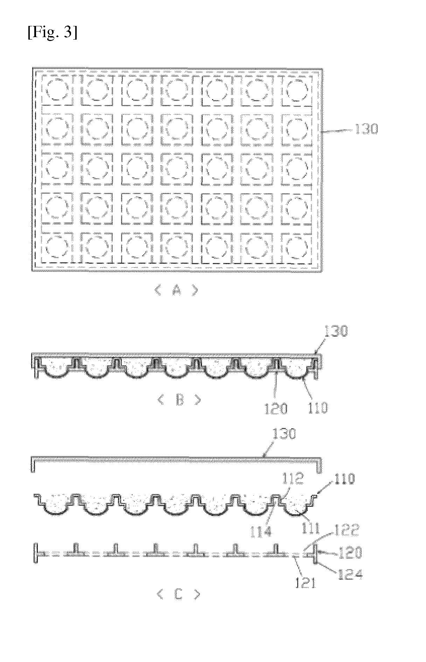

As shown in the drawings 1 through 3, a spice storage container having a lattice structure (100) of the present invention consists of

A spice storage lattice container (110) in which many container lattice grooves (112) with containers (111) that store spices such as ground and crushed garlic or ginger are formed in horizontal and vertical lines,

A base frame (120) in which holes (121) into which said containers (111) are inserted and many frame lattice grooves (122) into which said container lattice grooves (112) are inserted are formed so as to insert and install said spice storage lattice container (110),

A cover plate (130) which covers said spice storage lattice containers (110) to protect them from foreign substances and to enable to stack said containers in multi-stage, and

A case (140) which stores and keeps the abovementioned components.

A convergent-divergent neck (113) is formed between said container (111) and said container lattice groove (112) installed in a spice storage lattice container (110), and said neck (113) is hung by rim (123) of said hole (121) in the bottom of said frame lattice groove (122).

That is, said container (111) is round and its maximum diameter is slighly bigger than the diameter of said hole (121), so that said container (111) can be flexibly inserted into said hole (121), while said neck (113) is hung by said rim (123).

In addition, said container lattice groove (112) of said spice storage lattice container (110) is formed in a lattice structure by a horizontal support and a vertical support, and said frame lattice groove (122) of said base frame (120) is formed in a lattice structure by a horizontal support and a vertical support, too.

And the hidden side of the horizontal support and the vertical support of said container lattice groove (112) has a concave groove (114) so that the horizontal support and the vertical support of said frame lattice groove (122) are inserted and installed.

In the bottom of both ends of said base frame (120), there are support protrusions (124) which help the base frame to be on the ground stably. It would be ok that said base frame is installed so that said container (111) does not touch the ground when said container (111) is inserted into said hole (121).

In the inner side surface of said case (140), a protrusion (141) is installed so that said cover plate (130) may be inserted and installed slidingly, and on both sides of said cover plate (130), groove (131) to be inserted into said protrusion (141) is formed. This configuration is similar with/same as a general drawer.

In the front side of said cover plate (130), there is a handle (132) for user to open or close easily the cover plate. On the upper side of said cover plate (130), stack groove (133) is formed to help stack.

At this time, the size of lattice of said container lattice groove (112) and said frame lattice groove (122) can be different depending on the amount or kind of spices. That is, a container having a small lattice structure can be used to store a small amount of spices such as ginger or garlic and a container having a little bit large lattice structure can be used to store chopped scallions or chili peppers. Of course, the selection is up to consumer's taste.

Also, said spice storage lattice container (110) is made of elastic materials such as silicon or rubber and when said container (111) is pressed in bottom, the spices get out of it and said container goes back to its original position by elasticity.

How to contain spices in a spice storage container having a lattice structure (100) of the present invention and use them can be explained as follows.

First, put spices such as ground and crushed garlic or ginger into said container lattice groove (112) installed in said spice storage lattice container (110) and said container (111).

Then, insert said container lattice groove (112) and said container (111) into the frame lattice groove (122) of said base frame (120) and make them get settled in it. At this time, insert said container (111) into said hole (121) and press it until said neck (113) is hung by said rim (123).

At the same time, the horizontal support and the vertical support of said frame lattice groove are inserted into said concave groove (114) which is formed in the hidden side of the horizontal support and the vertical support of said container lattice groove (112).

Then, said container lattice groove (112) is inserted into said frame lattice groove (122) and said spice storage lattice container (110) is completely installed in said base frame (120).

After that, put said cover plate (130) on the top of said spice storage lattice container (110) and store it in said case (140) and put the case in a refrigerator.

By doing like this, user can take out and use it as needed, thereby saving time in cooking and increasing use convenience.

[The second embodiment]

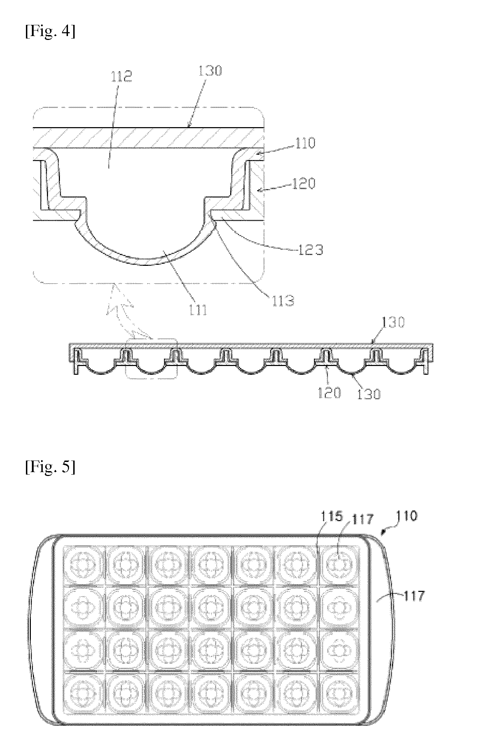

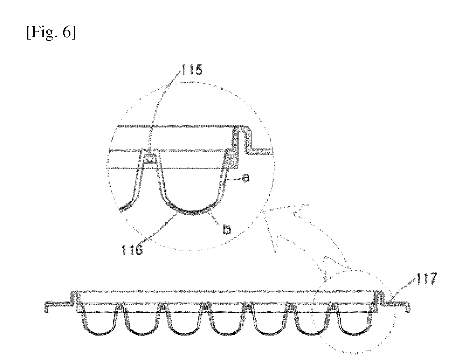

The drawings 5 and 6 show the second embodiment of a spice storage lattice container, which provides functions without the base frame (120) of the first embodiment.

As shown in the drawings 5 and 6, the handles (117) are formed on the right and left sides lengthways and many containers (111) are installed in the inner side of the handles and the supporters (115) are installed at regular intervals in the lower part between the container (111) and the container (111). When user holds the handle (117) and twists the spice storage lattice container (110), the center of container (111) is twisted much and the supporter (115) is relatively less twisted and the frozen spices can be easily separated from the container (110).

Meanwhile, the container (111) is inclined toward center when down to the bottom, as shown in the drawing 6, and this inclination provides a great twist so as to expedite the separation of spices. The container (111) becomes thinner toward center and can be changed (bent) easily by the strength of user's hands. With the thickness (a) of the upper part is larger than that (b) of the lower center, user twist the spice storage lattice container (110) and press the lower part of the container (111) by hand and push the frozen spices out of it.

Meanwhile, the container (111) and the container (111) may be combined by their upper parts and provide ruggedness like a supporter by a combined structure between their upper parts without a separate supporter (115).

Because a spice storage lattice container (110) of the present invention is made of one single material but can be bent easily due to its thin bottom of container, user can separate the spices easily from the container.

In addition, a reinforcing rib (116) is formed in the center of the container. Although the shape of said reinforcing rib (116) looks petal in a circle as shown in the drawing 5, it can be cross-shaped, triangle-shaped or only round-shaped. Also, by jutting the round shape of said reinforcing rib (116) toward bottom and making the thickness thin, the degree of bending can be higher than other places. Said reinforcing rib (116) lets the frozen spices be easily separated from the container (110) and provides the container (111) pushed and bent by user's hand with restoring force.

## Claims

1. For a spice storage container having a lattice structure which can store spices
such as ground and crushed garlic or ginger in a small amount, said spice storage container consists of a container which can store spices such as ground and crushed garlic or ginger, a spice storage lattice container having a lattice structure which is formed next to said container and consists of many container lattice grooves in horizontal and vertical lines, a cover plate which covers said spice storage lattice containers to protect them from foreign substances, and a case which stores them in the inside slidingly to keep and manage.

2. The spice storage container having a lattice structure as claim 1, wherein a base
frame is included so that said spice storage lattice container may be inserted and installed with many frame lattice grooves in horizontal and vertical lines to be matched to the hole into which said container is inserted and said container lattice groove and inserted and installe, and
Said container lattice groove of said spice storage lattice container is formed in a lattice structure by a horizontal support and a vertical support and said frame lattice groove of said base framed is formed in a lattice structure by a horizontal support and a vertical support, too, and
The hidden side of the horizontal support and the vertical support of said container lattice groove has a concave groove so that the horizontal support and the vertical support of said frame lattice groove are inserted and installed.

3. The spice storage container having a lattice structure as claim 2, wherein said
spice storage lattice container (110) has a convergent-divergent neck (113) is formed between said container (111) and said container lattice groove (112) and said container (111) is round and its maximum diameter is slighly bigger than the diameter of said hole (121), so that said container (111) can be flexibly inserted into said hole (121).

4. The spice storage container having a lattice structure as claim 1, wherein the
container of said lattice container has the bottom inclined downward across said partition.

5. The spice storage container having a lattice structure as claim 4, wherein said
container has smaller thickness in its lower part than its upper part.

6. The spice storage container having a lattice structure as claim 4, wherein said
lattice container has supports which are installed downward between containers at regular intervals.

7. The spice storage container having a lattice structure as claim 4, wherein said
container has a reinforcing rib protruded in the center bottom and the thickness of the reinforcing rib is smaller than the upper part of the container.
